Europäisches Patentamt

European Patent Office

Office européen des brevets

(19)

(11) Veröffentlichungsnummer : **0 380 937 B1**

(12) # EUROPÄISCHE PATENTSCHRIFT

(45) Veröffentlichungstag der Patentschrift :
**14.04.93 Patentblatt 93/15**

(51) Int. Cl.$^5$ : **G01F 1/58,** G01F 1/60,
G01P 5/08

(21) Anmeldenummer : **90100501.7**

(22) Anmeldetag : **11.01.90**

(54) **Induktiver Durchflussmesser.**

(30) Priorität : **02.02.89 DE 3903068**

(43) Veröffentlichungstag der Anmeldung :
**08.08.90 Patentblatt 90/32**

(45) Bekanntmachung des Hinweises auf die
Patenterteilung :
**14.04.93 Patentblatt 93/15**

(84) Benannte Vertragsstaaten :
**CH DE DK FR GB LI NL**

(56) Entgegenhaltungen :
**DE-A- 2 725 026**
**DE-A- 3 145 183**
**DE-B- 2 054 624**

(73) Patentinhaber : **TURBO-WERK Messtechnik
GmbH
Gremberger Strasse 151
W-5000 Köln 91 (DE)**

(72) Erfinder : **Doll, Friedhelm, Dipl.-Ing.
Hoffnung 16
W-5632 Wermelskirchen (DE)**

(74) Vertreter : **Selting, Günther, Dipl.-Ing. et al
Patentanwälte von Kreisler, Selting, Werner
Deichmannhaus am Hauptbahnhof
W-5000 Köln 1 (DE)**

**Beschreibung**

Die Erfindung betrifft einen induktiven Durchflußmesser der im Oberbegriff des Patentanspruchs 1 angegebenen Art.

Induktive Durchflußmesser haben einen Magnetfelderzeuger, z.B. eine Spule, der in einem Rohr ein quergerichtetes Magnetfeld erzeugt. Ferner sind an dem Rohr zwei Elektroden angebracht, deren Spannung einer Auswerteschaltung zugeführt wird. Wenn in dem Rohr eine elektrisch leitfähige Flüssigkeit quer zu dem Magnetfeld strömt, entsteht an den Elektroden eine elektrische Spannung, deren Höhe proportional der magnetischen Feldstärke und der Strömungsgeschwindigkeit ist.

Die ersten induktiven Durchflußmesser sind Wechselfeldgeräte, bei denen der Magnetfelderzeuger unmittelbar an die Spannung des Stromversorgungsnetzes, beispielsweise 220 V/50 Hz, angeschlossen wird.

Ein Wechselfeldgerät hat den Vorteil, daß ohne Aufwand an Schalt- und Steuereinrichtungen ein starkes Magnetfeld erzeugt werden kann, so daß an den Elektroden eine hohe Signalamplitude entsteht und somit ein großer Signal/Stör-Abstand erreichbar ist. Durch die relativ hohe Frequenz der Netzspannung hat ein derartiger Durchflußmesser ein schnelles Ansprechverhalten. Nachteilig ist bei Wechselfeldgeräten jedoch, daß systembedingt eine Nullpunktdrift des Nutzsignals eintritt. Das an den Elektroden entstehende Nutzsignal hat eine Phasenverschiebung von ca. 90° zur Netz-Wechselspannung. Da die Auswerteschaltung einschließlich der von den Elektroden kommenden Leitungen sehr störempfindlich ist, werden sowohl Störspannungen, die unmittelbar aus der Netzspannung stammen, als auch selbstinduzierte Störspannungen in die Auswerteschaltung hereingetragen. Es ist üblich, die im Nutzsignal enthaltenen Störsignale durch Phasenselektion zu eliminieren. Da die Phasenbeziehung zwischen Störsignal und Nutzsignal sich jedoch in Abhängigkeit von der Gerätetemperatur und von anderen Einflüssen zeitlich ändert, erfordert eine phasenselektive Eliminierung der Störsignale ein häufiges Nachstellen und Justieren. Ein weiterer Nachteil ist die erhebliche Blindleistungsaufnahme von Wechselfeldgeräten.

Neue induktive Durchflußmesser arbeiten mit einem getakteten Gleichfeld. Hierbei wird der Magnetfelderzeuger mit getaktetem Gleichstrom erregt, wobei die Polarität der Gleichstromerregung wechseln kann. Derartige Geräte haben eine ausgezeichnete Nullpunktstabilität und eine geringe Leistungsaufnahme. Ein wesentlicher Nachteil dieser Geräte besteht jedoch darin, daß mit vertretbarem elektronischem Aufwand nur relativ geringe Erregerströme erzeugt werden können, so daß Nutzsignale von kleiner Amplitude entstehen. Die Taktfrequenz des getakteten Gleichfeldes ist relativ niedrig, so daß die Reaktionsgeschwindigkeit der Durchflußmessung verringert wird. Sowohl die relativ geringe Nutzspannung als auch die niedrige Taktfrequenz bewirken ein geringes Signal/Stör-Verhältnis.

Ein induktiver Durchflußmesser, von dem der Oberbegriff des Patentanspruchs 1 ausgeht, ist bekannt aus DE-A-20 54 624. Bei diesem Durchflußmesser ist die das Magnetfeld erzeugende Erregerspule in einer aus vier elektronischen Schaltern bestehenden Schalterbrücke enthalten, die an die Netzspannung angeschlossen ist. Zu jedem Zeitpunkt sind zwei diagonal angeordnete elektronische Schalter der Schalterbrücke leitend. Durch Umschalten der Schalterpaare kann die Erregerspule in Bezug auf die Netzspannung umgepolt werden. Dieses Umpolen erfolgt jeweils bei einem Nulldurchgang der Wechselspannung. Da die elektronischen Schalter Triacs sind, werden sie stets im Nulldurchgang des Erregerstroms gelöscht und danach sofort wieder gezündet. Jedes der beiden Schalterpaare bleibt über eine bestimmte Periodenzahl aktiv, die von einem Zähler erfaßt wird. Danach wird das andere Schalterpaar aktiviert. Durch die periodisch erfolgende Umpolung der Erregerwicklung in Bezug auf die Netzspannung sollen solche Störspannungen kompensiert werden, die sich zeitlich langsam in Amplitude und Phasenlage ändern. Die Auswerteschaltung enthält einen Gleichrichter, dem ein Phasenreferenzsignal zugeführt wird und der nur diejenige Komponente des Elektrodensignals durchläßt, die in Phase mit dem Phasenreferenzsignal ist. Auch hierbei treten die oben erläuterten Nachteile der Wechselfeldgeräte auf, d.h. das Verfahren ist nicht systembedingt nullpunktgenau (Autozero).

DE-A-27 25 026 beschreibt ebenfalls ein Wechselfeldgerät, bei dem der Magnetfelderreger über einen elektronischen Schalter mit der Wechselspannung verbunden ist. Der elektronische Schalter wird von einem Taktgeber mit fest eingestelltem Taktverhältnis getaktet, wobei die Taktzeiten des Taktgebers größer als die Periode der Erregerspannung sind. Der Taktgeber wird unabhängig von den Signalen der Auswerteschaltung betrieben, so daß die Zeitgebung der Schalterbetätigung nicht in einer vorbestimmten Phasenbeziehung zur Frequenz der Wechselspannung steht. Die Elektrodensignale werden nach Verstärkung Abtast- und Halteschaltungen zugeführt, deren Ausgangssignale voneinander subtrahiert werden. Auch dieses Verfahren ist nicht systembedingt nullpunktgenau, da der durch Selbstinduktion erzeugte Störanteil durch die oben erwähnte Subtraktion nicht verschwindet.

DE-A-3145 183 beschreibt ebenfalls ein Wechselfeldgerät bei dem der Magnetfelderreger über einen SCR-Schalter mit der Wechselspannung verbunden ist. Die SCR werden mit einer Frequenz gesteuert, die ein Bruchteil der Netzfrequenz ist.

Der Erfindung liegt die Aufgabe zugrunde, einen induktiven Durchflußmesser der im Oberbegriff des Patentanspruchs 1 angegebenen Art zu schaffen, der die Vorteile des Wechselfeldgerätes und des Gerätes mit getaktetem Gleichfeld vereinigt, ohne die Nachteile zu übernehmen. Dies bedeutet, daß der Durchflußmesser ohne großen Steueraufwand mit Wechselspannung betrieben werden soll, ohne daß die Gefahr der Nullpunktdrift auftritt, d.h. das Gerät soll systembedingt (und nicht durch Kompensation oder Abgleich erreicht) nullpunktgenau sein (Autozero).

Die Lösung dieser Aufgabe erfolgt mit einem Durchflußmesser, der die Merkmale des Patentanspruchs 1 aufweist.

Bei dem erfindungsgemäßen Durchflußmesser ist der Magnetfelderzeuger über einen elektronischen Schalter an die Wechselspannung angeschlossen. Der Schalter wird von einem Nulldurchgangsdetektor derart gesteuert, daß der das Magnetfeld erzeugende Erregerstrom im Nulldurchgang der Wechselspannung eingeschaltet wird. Der Schalter wird wieder geöffnet, wenn der Erregerstrom durch Null geht. Danach folgt eine Pause von einer einstellbaren Anzahl von Halbwellen der Wechselspannung und danach wird der Erregerstrom, wie oben erläutert, eingeschaltet.

Ein wesentlicher Vorteil des erfindungsgemäßen Durchflußmessers besteht darin, daß das dem Erregerstrom proportionale Nutzsignal nicht durch eine kritische Phasenselektion von Störsignalen befreit werden muß, sondern durch bloße Integration gewonnen werden kann, wobei alle von außen in die Auswerteschaltung gelangenden Störsignale innerhalb einer halben Taktperiode eliminiert werden einschließlich der durch Selbstinduktion in den Elektrodenkreis induzierten Störspannungen. Am Ende eines Erregerstrom-Impulses ist dieser Erregerstrom zu Null geworden. Damit ist zu diesem Zeitpunkt (bzw. wegen vorhandener Wirbelströme kurze Zeit später) das Magnetfeld $B_2$ gleich groß wie das Feld $B_1$ zu Beginn der Erregung. Das Nutzsignal kann durch Integration der Elektrodenspannung über eine oder mehrere Perioden der Frequenz der Erregerspannung (Wechselspannung) gewonnen werden. Das Integral über eine oder mehrere Perioden einer Netzstörspannung ist aber gleich Null, unabhängig von der Phasenlage dieser Störspannung. Ferner ist der durch Selbstinduktion in die Elektrodenschleife eingekoppelte Störspannungsanteil erzwungenermaßen Null, da $B_1 = B_2$ (s.o.), damit auch

$$\int_{0}^{2} U_{ind}\, dt = \int_{0}^{2} \frac{dB}{dt}\, dt = B_2 - B_1 = 0.$$

Daraus folgt, daß der erfindungsgemäße Durchflußmesser unempfindlich gegen selbstinduzierte und von außen induzierte Störspannungen ist. Darüber hinaus entsteht gemäß der einschlägigen Lehre über elektrische Einschwingvorgänge eine Strom- und damit auch Feld- und Nutzsignalamplitude, die die Werte der quasistationären Werte um fast den Faktor zwei übersteigt.

Der erfindungsgemäße Durchflußmesser weist die Vorteile der Wechselfeldgeräte auf, nämlich eine hohe Signalamplitude, weil der Magnetfelderzeuger unmittelbar (über den elektronischen Schalter) an die Netzspannung angeschlossen werden kann, hat jedoch nicht den Nachteil des vagabundierenden Nullpunktes. Andererseits ist der Steueraufwand für die Erzeugung des Magnetfeldes viel geringer als bei Durchflußmessern mit getaktetem Gleichfeld.

Im folgenden wird unter Bezugnahme auf die Zeichnungen ein Ausführungsbeispiel der Erfindung näher erläutert.

Es zeigen:

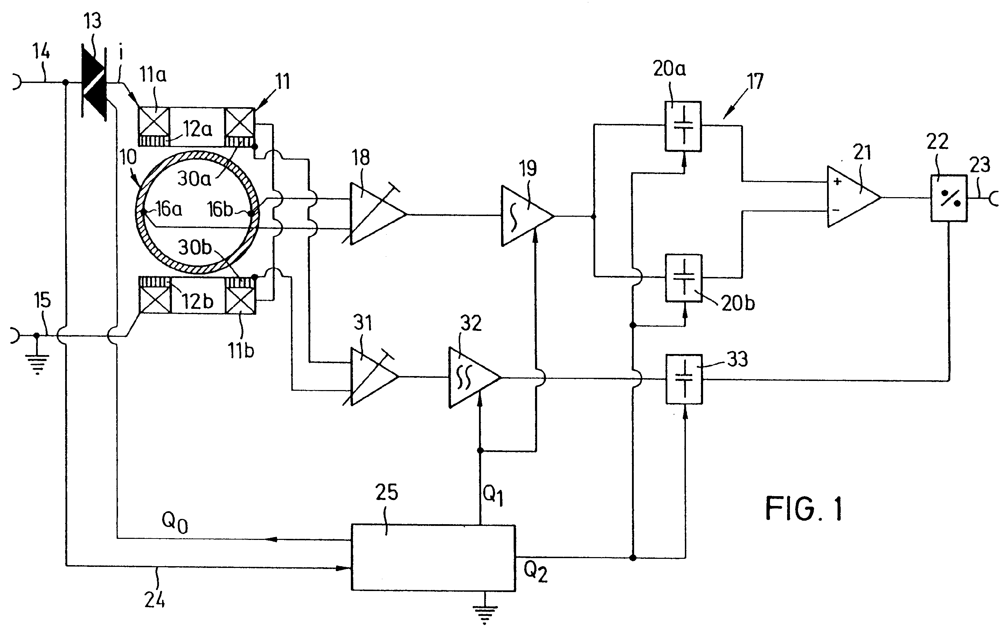

Fig. 1      ein schematisches Schaltbild des induktiven Durchflußmessers und

Fig. 2      ein Diagramm verschiedener Signale, die in der Schaltung nach Fig. 1 auftreten.

Der Durchflußmesser weist in bekannter Weise ein Rohr 10 aus nichtleitendem Material auf, in dem die Flüssigkeit, deren Durchflußrate gemessen werden soll, strömt. An dem Rohr 10 ist der Magnetfelderzeuger 11 angebracht, der im vorliegenden Fall aus zwei Spulen 11a und 11b besteht, die gegenüberliegenden Seiten des Rohres koaxial zueinander angeordnet sind und die elektrisch in Reihe geschaltet sind. Ein Erregerstrom, der durch die beiden Spulen 11a,11b fließt, erzeugt in dem Rohr 10 ein quer durch das Rohrinnere hindurchgehendes Magnetfeld. Der Magnetfelderzeuger 11 weist ferner Referenzwicklungen 12a,12b auf, deren Zweck später erläutert wird.

Die Reihenschaltung der Spulen 11a und 11b ist in Reihe mit dem elektronischen Schalter 13 über die Leitungen 14 und 15 an das Versorgungsnetz angeschlossen, so daß die Reihenschaltung aus dem Schalter 13 und den Spulen 11a und 11b direkt an das Stromnetz von z.B. 220 V und 50 Hz angeschlossen werden kann.

An der Innenwand des Rohres 10 befinden sich einander gegenüberliegend zwei Elektroden 16a,16b, die an die Auswerteschaltung 17 angeschlossen sind.

Die Auswerteschaltung 17 enthält einen mit den Elektroden 16a,16b verbundenen Verstärker 18, dessen Signal einem Integrator 19 zugeführt wird. Das Ausgangssignal des Integrators 19 wird zwei Abtast- und Halteschaltungen 20a und 20b zugeführt, deren Ausgänge mit den beiden Eingängen eines Differenzverstärkers 21 verbunden sind. Das Ausgangssignal des Differenzverstärkers 21 wird dem Zähler-Eingang eines Dividierers 22 zugeführt. Das Ausgangssignal der Dividierschaltung 22 am Ausgang 23 ist der Durchflußrate der Flüssigkeit im Rohr 10 proportional.

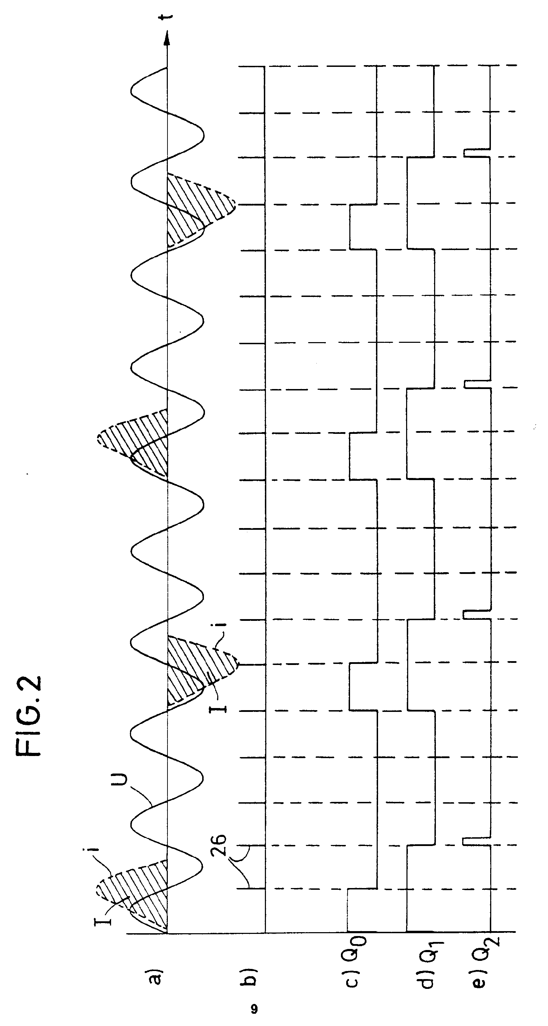

Die Amplitude der Wechselspannung in Leitung 14 wird über Leitung 24 der Steuerelektronik 25 zugeführt. Diese Steuerelektronik enthält einen Nulldurchgangsdetektor, der bei jedem Nulldurchgang der Wechselspannung einen Impuls erzeugt. In Fig. 2 ist in der obersten Zeile a) der zeitliche Verlauf der Wechselspannung an den Leitungen 14 und 15 dargestellt und mit U bezeichnet. In Zeile b) sind die Nadelimpulse 26 dargestellt, die von dem Nulldurchgangsdetektor jeweils in den Nulldurchgängen der Wechselspannung U erzeugt werden.

In der obersten Zeile a) in Fig. 2 ist der Verlauf des Erregerstroms, der durch den Magnetfelderzeuger 11 fließt, mit i bezeichnet. Der als Triac ausgebildete elektronische Schalter 13 wird von der Steuerelektronik 25 durch Impulse $Q_O$, die seinem Gate zugeführt werden, derart gesteuert, daß er jeweils in einem Nulldurchgang der Wechselspannung in den leitenden Zustand gesteuert wird. Der Triac bleibt solange leitend, bis der Strom i, der eine Phasenverschiebung gegenüber der Wechselspannung U hat, Null geworden ist. Ein Thyristor oder Triac werden bekanntlich dann in den Sperrzustand gesteuert, wenn der Hauptstrom zu Null wird, ohne daß am Gate eine Steuerspannung ansteht. Das Signal $Q_O$ erstreckt sich gemäß Fig. 2 c) über eine Halbwelle der Wechselspannung U. Daher kann der Triac 13 in der nächstfolgenden Halbwelle in den Sperrzustand gelangen, wenn der Strom i Null wird.

Bei dem vorliegenden Ausführungsbeispiel werden die dem Gate des Triac zugeführten Signale $Q_O$ jeweils nach n = 5 Nulldurchgängen der Wechselspannung U erzeugt, so daß der Strom i, weil n in diesem Fall eine ungerade Zahl ist, abwechselnd als positiver und negativer Strom erzeugt wird. Wenn n eine gerade Zahl wäre, würden die Erregerströme i ausschließlich unipolar, d.h. mit gleicher Polarität, erzeugt werden. Auch damit funktioniert der Durchflußmesser. Diese Betriebsweise ist der in Fig. 2a) dargestellten bipolaren Erzeugung des Erregerstroms i im allgemeinen vorzuziehen, weil dadurch eine noch bessere Kompensation der Störspannungen möglich ist, d.h. bei unipolarem Betrieb verschwinden auch die relativ geringen Störeinflüsse der Remanenzinduktion.

Die Steuerelektronik 25 erzeugt in Abhängigkeit von den Nulldurchgangssignalen 26 die in Zeile d) von Fig. 2 dargestellten Impulse $Q_1$, die sich über eine Periode der Wechselspannung U erstrecken, also über eine positive und eine negative Halbwelle hinweg. Jeder Impuls $Q_1$ beginnt mit demjenigen Nulldurchgang der Wechselspannung U, an dem der Triac 13 in den leitenden Zustand gesteuert wird. Die Impulse $Q_1$ steuern den Integrator 19 so, daß dieser die Integration nur während der Dauer der Impulse $Q_1$ durchführt und sein Ausgangssignal anschließend zwangsweise rückgesetzt wird. Da auftretende Störspannungen die Frequenz der Wechselspannung U (oder ein Vielfaches davon) haben, wird das Integral dieser Störspannung über eine volle Periode der Wechselspannung zu 0. Dagegen ergibt das Integral über den Erregerstrom i innerhalb der betreffenden Periode den Wert I, dessen Größe der schraffierten Fläche in Fig. 2 entspricht. Die an den Elektroden 16a und 16b entstehende Nutzspannung ist der Fläche I proportional. Am Ausgang des Integrators 19 steht am Ende eines jeden Signals $Q_1$ ein Wert an, dessen Größe dem Zeitintegral I des unmittelbar vorangegangenen Erregerstroms i entspricht. Dieser Ausgangswert des Integrators 19 wird unter Taktung durch das von der Steuerelektronik erzeugte Signal $Q_2$ einer Abtast- und Halteschaltung 20a oder 20b zugeführt. Das Signal $Q_2$ ist ein kurzer Impuls, der unmittelbar im Anschluß an die Beendigung des Signals $Q_1$ erzeugt wird. Die Signale $Q_2$ sind so aufgeteilt, daß abwechselnd jeweils eines dieser Signale die Abtast- und Halteschaltung 20a aktiviert und das nächste Signal die Abtast- und Halteschaltung 20b aktiviert. Auf diese Weise werden die positiven Zeitintegrale I, die gemäß Fig. 2 a) oberhalb der Zeitachse t liegen, in die Abtast- und Halteschaltung 20a übernommen, während die negativen Zeitintegrale, die unterhalb der Zeitachse t liegen, in die Abtast- und Halteschaltung 20b übernommen werden. Die Abtast- und Halteschaltungen haben die Funktion, daß sie bei einem Impuls $Q_2$ das jeweilige Ausgangssignal des Integrators 19 übernehmen und speichern und bis zum nächstfolgenden Impuls $Q_2$ gespeichert halten.

Der Pluseingang des Differenzverstärkers 21 ist mit der Abtast- und Halteschaltung 20a verbunden und der Minuseingang mit der Abtast- und Halteschaltung 20b. Da der in der Abtast- und Halteschaltung 20b enthaltene Wert negativ ist, werden vom Differenzverstärker 21 die Beträge der beiden Inhalte der Abtast- und Halteschaltungen addiert. Am Ausgang des Differenzverstärkers 21 entsteht eine Spannung, die der Spannung zwischen den Elektroden 16a und 16b proportional ist, jedoch von der Größe der den Leitungen 14 und 15 zugeführten Wechselspannung abhängt.

Um die Abhängigkeit des Ausgangssignals von der Größe der Wechselspannung zu beseitigen, ist am Magnetfelderzeuger 11 eine zusätzliche Spulenanordnung aus den Hilfsspulen 30a und 30b vorgesehen. Diese Hilfsspulen sind miteinander in Reihe geschaltet und bilden Sekundärspulen zu den Spulen 11a und 11b. Die Hilfsspulen 30a und 30b sind mit den Eingängen des Verstärkers 31 verbunden, dessen Ausgang an den Eingang eines Doppel-Integrators 32 angeschlossen ist. Das Ausgangssignal des Doppel-Integrators 32 wird einer Abtast- und Haltestufe 33 zugeführt, deren Ausgang mit dem Nenner-Eingang des Dividierers 22 verbunden ist.

Der Doppel-Integrator 32 besteht aus zwei hintereinander geschalteten Integratoren, von denen der erste Integrator das Zeitintegral über die in die Hilfsspulen induzierte Spannung bildet. Diese Integralbildung entspricht der Integralbildung $U_N = k \int i \, dt$, wobei $U_N$ die Spannung des Nutzsignals zwischen den Elektroden 16a,16b, k eine Konstante und i der Erregerstrom ist. Durch den ersten Integrator des Doppel-Integrators 32 wird also die Spannung am Eingang des Verstärkers 18 nachgeahmt. Der zweite Integrator des Doppel-Integrators 32 hat die Funktion des Integrators 19 und er wird auch durch das Signal $Q_1$ gesteuert. Die Abtast- und Halteschaltung 33 hat die Funktion der Abtast- und Halteschaltungen 20a und 20b und sie wird auch durch das Signal $Q_2$ gesteuert. Dies bedeutet, daß die Schaltungen 31,32 und 33 die gleiche Signalverarbeitung durchführen wie die Nutzsignalschaltung aus den Elementen 18-21, jedoch mit dem Unterschied, daß die Spannung am Ausgang der Abtast- und Halteschaltung 33 ausschließlich von der Größe der den Leitungen 14 und 15 zugeführten Wechselspannung abhängt und nicht von der Strömung im Innern des Rohres 10. Durch die im Teiler 22 durchgeführte Division zweier Spannungen, die beide von der Größe der Wechselspannung abhängen, wird der Einfluß der Wechselspannungsamplitude eliminiert. Dadurch wird das an Leitung 23 anstehende Ausgangssignal unabhängig von der Größe der Wechselspannung.

Wenn sich keine leitfähige Flüssigkeit zwischen den Elektroden 16a und 16b befindet, sollte der Erregerstrom i abgeschaltet werden, um eine unnötige Erwärmung des Magnetfelderzeugers 11 zu vermeiden. Zu diesem Zweck ist an die Elektroden 16a und 16b eine (nicht dargestellte) Hilfsstromquelle angeschlossen, die an die Steuerelektronik meldet, wenn kein Strom über die Elektroden fließt. Wenn ein Elektrodenstrom nicht fließt, bewirkt die Steuerelektronik 25 das zwangsweise Sperren des Schalters 13. Auf diese Weise ist eine einfache Abschaltung des Magnetfelderzeugers 11 ohne zusätzliche Schaltelemente möglich.

## Patentansprüche

1. Induktiver Durchflußmesser mit
   einem an eine Wechselspannung anschließbaren Magnetfelderzeuger (11),
   einem Paar Elektroden (16a,16b)
   einer an die Elektroden angeschlossenen Auswerteschaltung (17),
   einer Steuerschaltung (25), die einen die Nulldurchgänge der Wechselspannung erkennenden Nulldurchgangsdetektor enthält,
   und einem den Magnetfelderzeuger (11) mit der Wechselspannung verbindenden elektronischen Schalter (13), der von der Steuerschaltung (25) derart gesteuert ist, daß er nur in einem Nulldurchgang der Wechselspannung leitend wird und beim Nulldurchgang des Erregerstroms (i) gesperrt wird,
   **dadurch gekennzeichnet,**
   daß der Schalter (13) die Wechselspannung dem Magnetfelderzeuger (11) jeweils für weniger als eine Periodendauer zuführt und daß die Auswerteschaltung (11) einen Integrator (19) enthält, der vom Beginn des Leitens des Schalters (13) die Elektrodenspannung über eine Periodendauer der Wechselspannung oder ein Vielfaches davon integriert.

2. Induktiver Durchflußmesser nach Anspruch 1, dadurch gekennzeichnet, daß der elektronische Schalter (13) jeweils im n-ten Nulldurchgang der Wechselspannung in den leitenden Zustand gesteuert wird, wobei n eine einstellbare ganze Zahl größer als 1, vorzugsweise größer als 2, ist.

3. Induktiver Durchflußmesser nach Anspruch 1 oder 2, dadurch gekennzeichnet, daß der Schalter (13) jeweils im n-ten Nulldurchgang der Wechselspannung in den leitenden Zustand gesteuert wird, wobei n eine ungerade Zahl (bipolarer Erregermodus) oder eine gerade Zahl (unipolarer Erregermodus) ist.

4. Induktiver Durchflußmesser nach einem der Ansprüche 1 bis 3, dadurch gekennzeichnet, daß ein Detektor, der feststellt, ob Flüssigkeit zwischen den Elektroden (16a,16b) vorhanden ist, den Schalter (13) zwangsweise sperrt, wenn keine Flüssigkeit vorhanden ist.

5. Induktiver Durchflußmesser nach einem der Ansprüche 1 bis 4, dadurch gekennzeichnet, daß der Schalter (13) ein Triac oder ein Thyristor ist.

6. Induktiver Durchflußmesser nach Anspruch 3, dadurch gekennzeichnet, daß eine die positiven Ausgangssignale des Integrators (19) empfangende erste Abtast- und Halteschaltung (20a) und eine die negativen Signale des Integrators (19) empfangende zweite Abtast- und Halteschaltung (20b) vorgesehen ist, wobei die Abtast- und Halteschaltungen jeweils das Zeitintegral (I) des unmittelbar vorangegangenen Erregerstroms (i) speichern, und daß ein Differenzbildner (21) vorgesehen ist, der die Differenz zwischen den gespeicherten Signalen der beiden Abtast- und Halteschaltungen (20a,20b) bildet.

7. Induktiver Durchflußmesser nach einem der Ansprüche 1 bis 6, dadurch gekennzeichnet, daß mindestens eine magnetisch mit dem Magnetfelderzeuger gekoppelte Hilfsspule (30a,30b) vorgesehen ist, deren Ausgangssignal einem Doppelintegrator (32) zugeführt wird, und daß ein Dividierer das Ausgangssignal des Integrators (19) durch dasjenige des Doppelintegrators (32) teilt, um das Ausgangssignal der Auswerteschaltung zu bilden.

## Claims

1. An inductive flow meter, comprising
   a magnetic field generator (11) connectable to an alternating current voltage,
   a pair of electrodes (16a,16b),
   an evaluating circuit (17) connected to said electrodes,
   a control circuit (25) provided with a zero crossing detector for detecting the zero crossings of the alternating current voltage, and
   an electronic switch (13) connecting the magnetic field generator (11) to the alternating current voltage, said electronic switch (13) being controlled by the control circuit (25) in such a manner that it becomes conducting only at a zero crossing of the alternating current voltage and is switched out at a zero crossing of the exciting current (i),
   **characterized in**
   that the switch (13) supplies the alternating current voltage to the magnetic field generator (11) each time for less than one period length and that the evaluating circuit (17) includes an integrator (19) which, starting with the conducting state of the switch (13), integrates the electrode voltage over one period lenghth of the alternating current or a multiple thereof.

2. The inductive flow meter according to claim 1, characterized in that the electronic switch (13) is controlled to assume the conducting state at each n-th zero crossing of the alternating current voltage, n being a selectable integer larger than 1 and preferably larger than 2.

3. The inductive flow meter according to claim 1 or 2, characterized in that the switch (13) is controlled to assume the conducting state at each n-th zero crossing of the alternating current voltage, n being an odd number (bipolar exciting mode) or an even number (unipolar exciting mode).

4. The inductive flow meter according to any one of claims 1 to 3, characterized in that a detector for detecting the presence of liquid between the electrodes (16a,16b) positivley locks the switch (13) if no liquid is present.

5. The inductive flow meter according to any one of claims 1 to 4, characterized in that the switch (13) is a triac or a thyristor.

6. The inductive flow meter according to claim 3, characterized in that there are provided a first sample and hold circuit (20a) for receiving the positive output signals of the integrator (19) and a second sample and hold circuit (20b) for receiving the negative output signals of the integrator (19), said sample and hold circuits storing the respective time integral (I) of the directly preceding exciting current (i), and that a difference former (21) is provided for generating the difference between the stored signals of the two sample and hold circuits (20a,20b).

7. The inductive flow meter according to any one of claims 1 to 6, characterized in that there is provided at least one auxiliary coil (30a,30b) which is magnetically coupled to the magnetic field generator (11), the output signal of the auxiliary coil (30a, 30b) being supplied to a double integrator (32), and that a divider is provided for dividing the output signal of the integrator (19) by that of the double integrator (32) so as to generate the output signal of the evaluating circuit.

## Revendications

1. Débitmètre inductif comportant:

    un générateur de champ magnétique (11) qui peut être raccordé à une tension alternative,

    une paire d'éléctrodes (16a, 16b),

    un circuit d'évaluation (17) raccordé aux électrodes,

    un circuit de commande (25) qui contient un détecteur de passage par zéro qui reconnaît les passages à zéro de la tension alternative,

    et un interrupteur électronique (13), reliant le générateur de champ magnétique (11) à la tension alternative, qui est commandé par le circuit de commande (25) d'une manière telle qu'il ne devient conducteur qu'à un passage par zéro de la tension alternative et qu'il est bloqué lors du passage par zéro du courant excitateur (i),

    **caractérisé en ce que**

    l'interrupteur (11) amène chaque fois la tension alternative au générateur de champ magnétique (11) pour une durée inférieure à une période et en ce que le circuit d'évaluation (11) contient un intégrateur (19) qui intègre, à partir du début de l'état conducteur de l'interrupteur (13), la tension d'électrode sur une durée de période de la tension alternative ou sur un multiple de celle-ci.

2. Débitmètre inducteur selon la revendication 1, caractérisé en ce que l'interrupteur électronique (13) est respectivement amené à l'état conducteur au n-ième passage par zéro de la tension alternative, n étant un nombre entier réglable supérieur à 1, de préférence supérieur à 2.

3. Débitmètre inductif selon la revendication 1 ou 2, caractérisé en ce que l'interrupteur (13) est respectivement amené à l'état conducteur au n-ième passage par zéro de la tension alternative, n étant un nombre impair (mode bipolaire d'excitateur) ou un nombre pair (mode unipolaire d'excitateur).

4. Débitmètre inductif selon l'une des revendications 1 à 3, caractérisé en ce qu'un détecteur qui indique si un liquide est présent entre les électrodes (16a, 16b), bloque de façon forcée l'interrupteur (13) lorsqu'aucun fluide n'est présent.

5. Débitmètre inductif selon l'une des revendications 1 à 4, caractérisé en ce que l'interrupteur (13) est un triac ou un thyristor.

6. Débitmètre inductif selon la revendication 3, caractérisé en ce qu'il est prévu un premier circuit d'interrogation et de maintien (20a) recevant les signaux de sortie positifs de l'intégrateur (19) et un deuxième circuit d'interrogation et de maintien (20b) recevant les signaux négatifs de l'intégrateur (19), les circuits d'interrogation et de maintien mémorisant chacun l'intégrale de temps (I) du courant excitateur immédiatement précédent (i), et en ce qu'il est prévu un soustracteur (21) qui calcule la différence entre les signaux mémorisés des deux circuits d'interrogation et de maintien (20a, 20b).

7. Débitmètre inductif selon l'une des revendications 1 à 6, caractérisé en ce qu'il est prévu au moins une bobiné auxiliaire (30a, 30b), couplée magnétiquement au générateur de champ magnétique, dont le signal de sortie est amené à un intégrateur double (32) et en ce qu'un diviseur divise le signal de sortie de l'intégrateur (19) par celui de l'intégrateur double (32) pour constituer le signal de sortie du circuit d'évaluation.

FIG. 1

EP 0 380 937 B1

# FIG.2

EP 0 380 937 B1